# EUROPEAN PATENT APPLICATION

(11) **EP 4 620 628 A1**
(43) Date of publication of application: **24.09.2025**
(21) Application number: 25162423.5
(22) Date of filing: 07.03.2025
(51) Int. Cl.: B25J 9/10, B25J 9/14, B25J 15/00

(54) **DOUBLE-ACTING MODULAR ARTICULATING GRIPPER**

(30) Priority: 19.03.2024 US 202418609616
(71) Applicant: PHD, Inc., Fort Wayne, IN 46809 (US)
(72) Inventor: Williams, Matthew R., Fort Wayne, 46816 (US); Elder, Daniel, Yoder, 46798 (US)
(74) Representative: Fuchs Patentanwälte Partnerschaft mbB

(57) **Abstract**

A gripper for gripping a workpiece includes: a base; at least one middle segment pivotally connected to the base; a distal segment pivotally connected to the at least one middle segment; at least one actuator; a yoke coupled to the at least one actuator and configured to be moved in opposing directions by the at least one actuator; and at least one tendon coupled to the distal segment at two different coupling points and coupled to the yoke. The at least one middle segment and the distal segment are configured to pivot clockwise as the at least one actuator moves the yoke in a first direction and to pivot counterclockwise as the at least one actuator moves the yoke in a second direction which is opposite to the first direction.

## Description

### BACKGROUND OF THE DISCLOSURE

### 1. Field of the Invention

The present invention relates to gripper tooling, and, more particularly, to self-articulating grippers.

### 2. Description of the Related Art

The present invention relates to articulating grippers and incorporates elements of the modular articulating gripper previously disclosed in U.S. Patent No. 11,285,617 B2.

Grippers are mechanical devices which generally include jaws that are moved together or apart by motive devices, such as electric motors or pneumatic pistons. Tooling is typically fastened to the jaw to provide some degree of conformal contact between the surface of the tool and one or more surfaces of a gripped workpiece. Once the jaws have moved the fastened tooling into a position of contact with the gripped workpiece, the jaws produce a force against the tooling which is transferred by the tooling to retain the workpiece so that the position of the workpiece might be subsequently translated or rotated. It is often desirable that the tooling fully or partially encapsulate the profile of the workpiece to prevent relative motion from occurring between the workpiece and tooling as the workpiece is subsequently translated or rotated or external forces are applied to the workpiece.

It is known in the art to construct the tooling with a complimentary contacting surface profile which corresponds to the profile of the workpiece to better encapsulate a gripped workpiece. This method of encapsulation typically renders the tooling suitable for gripping only a single shape of workpiece or a series of similarly shaped workpieces that share a common surface profile. Generally, tooling must be removed and replaced if a noncompatible shape of workpiece is to be subsequently gripped, resulting in an undesirable increase in downtime and reduced throughput for the manufacturing or material handing operation of which the gripper is a part.

The modular articulating gripper disclosed in U.S. Patent No. 11,285,617 B2 contains internal fluid powered actuators which directly supply the motive force for articulation, while a stretched elastomeric tendon acting in opposition to the fluid powered actuators acts to restore the rotated articulated portions of the gripper to a non-rotated position when fluid power is removed from the actuators. This same restorative action simultaneously returns the pistons within the fluid powered actuators to a position suitable for supplying the motive force required to affect articulation when fluid power is applied again to the internal actuators.

Grippers which use fluid power to move components of the gripper in one direction, while using a spring or stretched elastomer strip to return the components to their original position upon the removal of fluid power, are commonly referred to a "single-acting" in the fluid power industry. In contrast, grippers which use fluid power to move components in two opposing motions are commonly referred to as "double-acting".

Double-acting grippers often provide the advantage over single-acting grippers of providing a greater degree of force in both directions of gripper component movement. It will be understood by one skilled in the art that such an increase in bi-directional force can enhance the ability of the gripper to grasp and subsequently manipulate gripped objects.

What is needed in the art is a cost-effective gripper for automatically accommodating the shape of the workpiece and gripping the workpiece.

### SUMMARY OF THE INVENTION

The present invention is directed to grippers that are configured for double-acting operation. A plurality of modular grippers can be arrayed together to increase the total gripping force applied to a gripped workpiece and / or the locations at which the gripping force is applied.

The invention in one form is directed to a gripper for gripping a workpiece, including: a base; at least one middle segment pivotally connected to the base; a distal segment pivotally connected to the at least one middle segment; at least one actuator; a yoke coupled to the at least one actuator and configured to be moved in opposing directions by the at least one actuator; and at least one tendon coupled to the distal segment at two different coupling points and coupled to the yoke. The at least one middle segment and the distal segment are configured to pivot clockwise as the at least one actuator moves the yoke in a first direction and to pivot counterclockwise as the at least one actuator moves the yoke in a second direction which is opposite to the first direction.

The invention in another form is directed to a gripper array including a plurality of juxtaposed grippers. Each of the grippers includes: a base; at least one middle segment pivotally connected to the base; a distal segment pivotally connected to the at least one middle segment; at least one actuator; a yoke coupled to the at least one actuator and configured to be moved in opposing directions by the at least one actuator; and at least one tendon coupled to the distal segment at two different coupling points and coupled to the yoke. The at least one middle segment and the distal segment are configured to pivot clockwise as the at least one actuator moves the yoke in a first direction and to pivot counterclockwise as the at least one actuator moves the yoke in a second direction which is opposite to the first direction.

An advantage of the present invention is that the gripper finger articulates, via the action of the actuator, to encapsulate a plethora of differently-shaped workpieces.

Another advantage of the present invention is that a plurality of grippers can be easily arrayed together to increase the total gripping force applied to a gripped workpiece and / or the locations at which the gripping force is applied.

Another advantage of the present invention is that the grippers are configured for double-acting operation, which can provide a greater degree of force in both directions of gripper component movement

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a perspective view of an embodiment of a gripper provided according to the present invention;
Fig. 2 is an exploded view of the gripper of Fig. 1;
Fig. 3 is a front view of the gripper of Fig. 1;
Fig. 4 is a cross-sectional view of the gripper, taken across line 4-4 in Fig. 3;
Fig. 5 is a cross-sectional view of the gripper, taken across line 5-5 in Fig. 3;
Fig. 6 is a cross-sectional view of another embodiment of a gripper provided according to the present invention that includes two tendons rather than a single tendon; and
Fig. 7 is a perspective view of a gripper array including a plurality of grippers provided according to the present invention.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

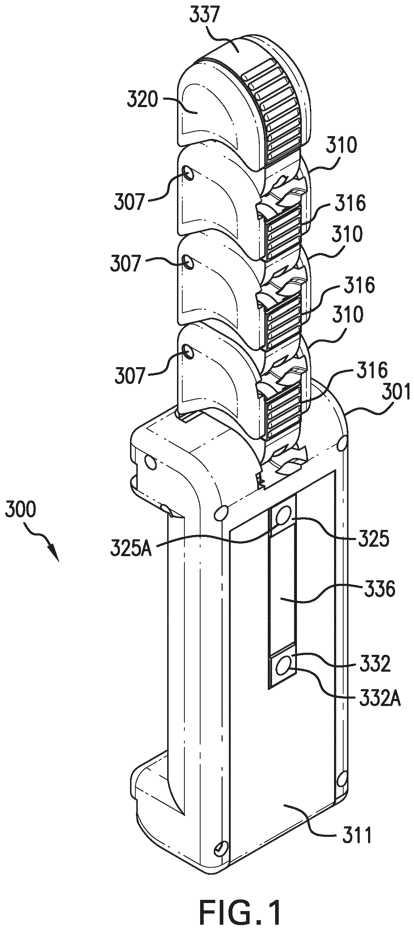

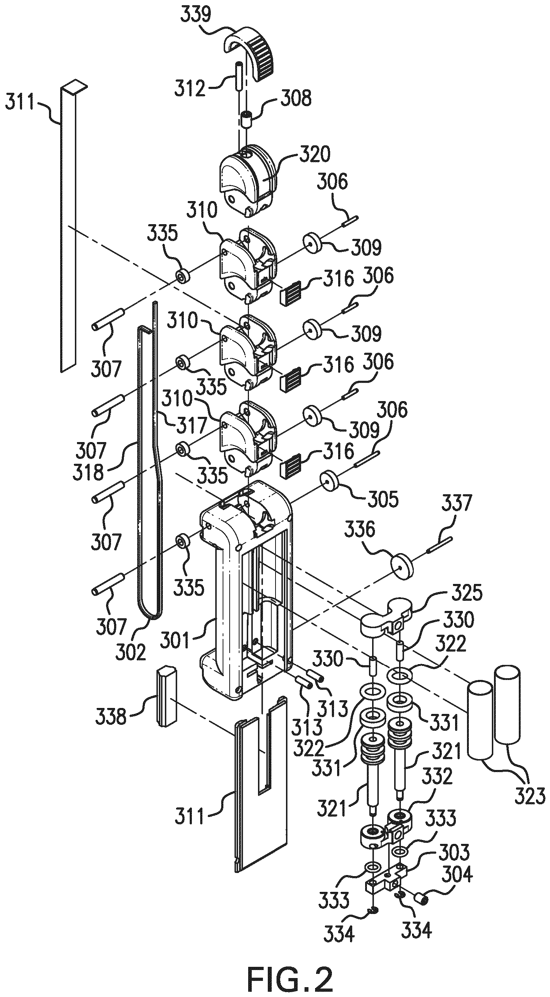

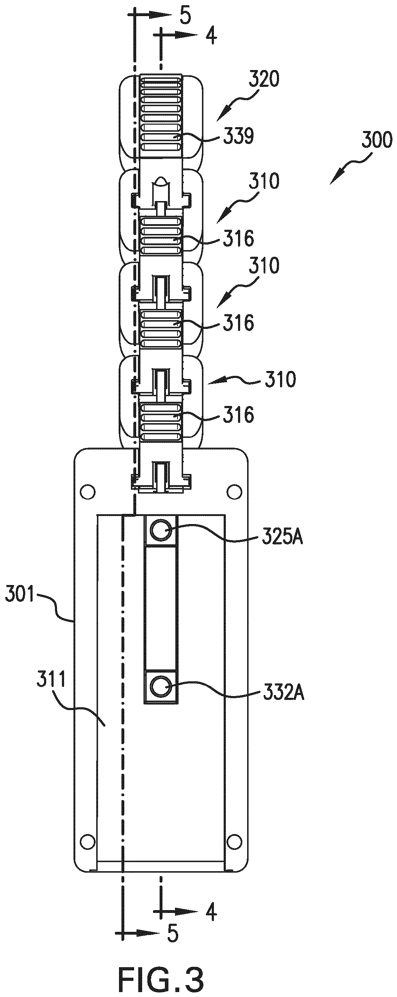

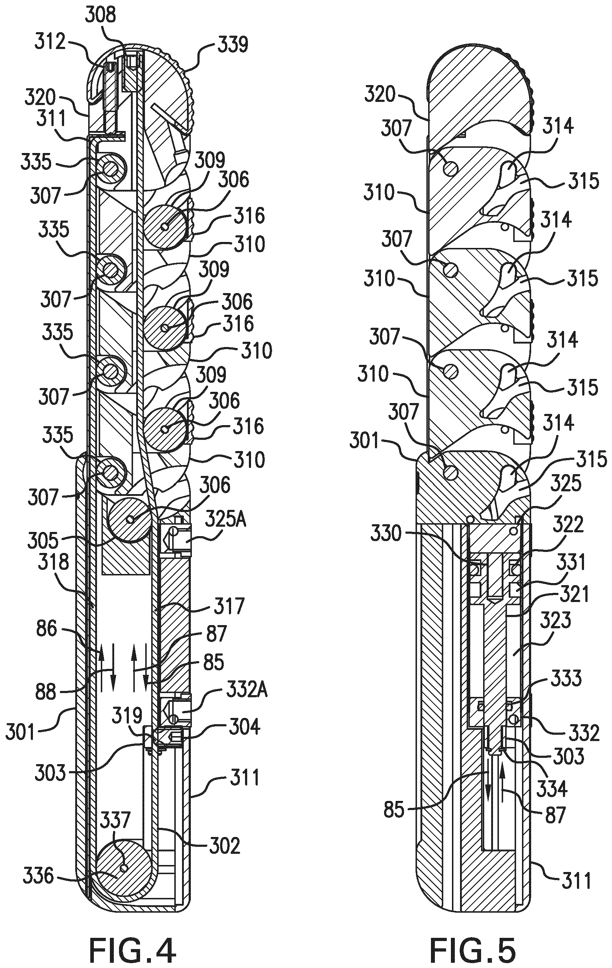

Referring now to the drawings, and more particularly to Figs. 1-5, there is shown an exemplary embodiment of a gripper 300 including a base 301 to which is attached at least one middle segment 310, illustrated as a chain of multiple identical articulated segments 310, that is coupled to and capped by an articulated distal segment 320. Gripper 300 includes at least one tendon 302 coupled to a yoke 303. The tendon(s) 302 is coupled to the distal segment 320 at two different coupling points. The tendon 302 may include a first end of an adducting portion 317 of the tendon connected to distal segment 320 at a first coupling point and an opposite second end of an abducting portion 318 of the tendon 302 attached to the distal segment 320 at a second coupling point that differs from the first coupling point (see Figs. 2 and 4). The tendon 302 may be in the form of, for example, a cable and pass around a tendon pulley 336. It should be appreciated that while the ends of the tendon 302 are described and illustrated as being coupled to the distal segment 320, this is optional and other non-end portions of the tendon 302 may be coupled to the distal segment 320 according to the invention. A setscrew 304 may mechanically fasten a yoke coupling point, which may be part of an intermediate portion 319, of the tendon 302 to the yoke 303. The intermediate portion 319 is between the two opposite ends of the tendon 302. However, in addition or alternatively to such mechanical attachment, the tendon 302 may be coupled to the yoke 303 with a suitable adhesive applied between the tendon 302 and the yoke 303. The tendon 302 may be composed of any desired material. In one embodiment, the tendon 302 is a polymer cable which offers the advantages over traditional steel cable of improved resistance to fatigue and corrosion, greater flexibility, improved dissipation of mechanical shock, and lower cost.

Along the adducting portion 317 of the tendon 302, a pulley 305, supported by pivot pin 306 pressed into complimentary holes in body 301, routes the motion of tendon 302 so that as the intermediate portion 319 of the tendon 302 is pulled downwards, in the direction of arrow 85, by the motion of yoke 303 relative to body 301, tendon 302 is drawn through the central passages of articulated segments 310. Although pulley 305 is shown as being directly supported by pivot pin 306, it is understood that a suitable commercial bearing bushing, radial ball bearing, or needle bearing could be interposed between the pulley 305 and pin 306 when the size of pulley 305 is sufficiently large to allow doing so.

Pivot pins 307 pass though complimentary holes in base 301 and segments 310 and 320 to attach the one or more middle segments 310 to base 301, to each other (when applicable), and to distal segment 320, forming a chain of pinned articulated segments radiating outwards from base 301. Although segments 310 and segment 320 are shown as being directly supported by pivot pins 307, it is understood that a suitable commercial bearing bushing, radial ball bearing, or needle bearing could be interposed between the pivot hole in the segments 310, 320 and pin 307 when the size of segment is sufficiently large to allow doing so.

The first end of the adducting portion 317 of the tendon 302 may be mechanically fastened to the distal segment 320 with a set screw 308. It is understood that such mechanical attachment could also be affected with a suitable adhesive applied between the tendon 302 and the segment 320. Tendon 302 passes over pulleys 309 disposed within each identical segment 310. In this manner, tendon 302, suitably attached between yoke 303 and distal segment 320, effectively forms the taut adducting tendon 302 located on one side of segment pivot pins 307. Although pulleys 309 are shown as being directly supported by pivot pins 306 pressed into complimentary holes in segments 310, it is understood that a suitable commercial bearing bushing, radial ball bearing, or needle bearing could be interposed between the pulley and pin when the size of pulley 309 is sufficiently large to allow doing so.

Gripper 300 may include the abducting portion 318 of tendon 302. The same tendon 302 which forms the adducting portion 317 of the tendon 302 may effectively form the abducting portion 318 of tendon 302, which is located on the opposing side of pivot pins 307. The abducting portion 318 of tendon 302 may be covered by a protective strip 311. The external strip 111 may be composed of a suitable elastomeric material. The distal end of the strip 311 is attached with setscrew 312 or in any desired way, such as thermal or adhesive bonding, into a complimentary groove in distal segment 320. The proximal end of elastomeric strip 311 is disposed within a complementary slot in body 301 and is attached to body 301 by the clamping action of setscrews 313 or by other suitable thermal or adhesive bonding. The portion of strip 311 between the distal and proximal attached ends is unconstrained and free to stretch or relax.

The abducting portion 318 of tendon 302 extends downward from the intermediate portion 319 to yoke 303, and around tendon pulley 336, supported by pivot pin 337 disposed into complimentary slots in body 301, to route the motion of tendon 302 so that as the intermediate portion 319 of the tendon 302 is pulled upwards, in the direction of arrow 87, by the motion of yoke 303 relative to body 301, tendon 302 is drawn through channels along the left side of articulated segments 310 (see Figs. 4 and 5). Although tendon pulley 336 is shown as being directly supported by pivot pin 337, it is understood that a suitable commercial bearing bushing, radial ball bearing, or needle bearing could be interposed between the pulley and pin when the size of tendon pulley 336 is sufficiently large to allow doing so.

The abducting, upper end of the tendon 302 may be mechanically fastened to the distal segment 320 by the clamping action of set screw 312. It is understood that such mechanical attachment could also be affected with a suitable adhesive applied between the tendon 302 and the segment 320. Tendon 302 passes over pulleys 335 disposed within each identical segment 310. In this manner, tendon 302, suitably attached between yoke 303 and distal segment 320, effectively forms the taut abducting tendon 302 located on one side of segment pivot pins 307. Although pulleys 335 are shown as being directly supported by pivot pins 307 pressed into complimentary holes in segments 310, it is understood that a suitable commercial bearing bushing, radial ball bearing, or needle bearing could be interposed between the pulley and pin when the size of pulley 335 is sufficiently large to allow doing so.

Bosses 314, protruding from the sides of common segments 310, engage complimentary slots 315, in body 301 and segments 310 to constrain the angle of counterclockwise (CCW) rotation of the segment pinned to base 301 and each successive pinned segment in the segment chain, relative to the prior segment (Fig. 5). Thusly constrained by the action of bosses 314 within slots 315, the segments 310, 320 cannot rotate CCW about pivots 307 beyond a position in which the segments are in a straight, vertical alignment with one another.

Downward motion, in the direction of arrow 85, of the adducting portion 317 of tendon 302 through the central passages of segments 310 induces a clockwise (CW) torque in segments 310 and 320 that causes the segments to rotate CW about pivot pins 107. Simultaneously, the abducting portion 318 of tendon 302, exiting yoke 302 below the intermediate portion 319 between the tendon 302 and yoke 303, passing around tendon pulley 336, is slackened, allowing the abducting portion 318 of tendon 302 to extend as the tendon 302 is pulled upwards, in the direction of arrow 86, by the progressive CW rotation of segments 310 and 320.

Conversely, upward motion, in the direction of arrow 87, of the adducting portion 317 of tendon 302 through the central passages of segments 310, slackens the adducting portion 317 of the tendon 302 allowing CCW rotation of segments 310 and 320 about pivot pins 307, as simultaneously, the abducting portion 318 of tendon 302 is pulled downwards, in the direction of arrow 88, around pulleys 335 and tendon pulley 336 to induce a CCW torque in segments 310 and 320, causing any previously CW rotated segments to return to their respective non-rotated positions. In this respect, the at least one middle segment 310 and the distal segment 320 are configured to pivot clockwise when the yoke 303 moves in a first direction and to pivot counterclockwise when the yoke moves in a second direction which is opposite to the first direction.

Pads 316 are suitably retained into complimentary recesses in segments 310. Pads 316 are constructed of a material such as a suitable elastomer or a nanodiamond impregnated metal substrate, possessing a high coefficient of static friction, so as to enhance the frictional forces generated between the pad 316 and any surface of the gripped workpiece that the pad might contact.

Strip 339 is suitably retained into a complimentary recess in segment 320. Strip 339 is constructed of a material such as a suitable elastomer or a nanodiamond impregnated metal substrate, possessing a high coefficient of static friction, so as to enhance the frictional forces generated between the strip 339 and any surface of the gripped workpiece that the strip 339 might contact.

One or more fluid actuators may be used to provide motive force against yoke 303. A surface of the yoke 303 may bear against complimentary faces of pistons 321. Pistons 321 are contained within complimentary bores within cylinders 323, such that the pistons 321 are free to translate along the longitudinal axes of the cylinders 323, but are constrained from radial movement. Elastomeric seals 322 seal the periphery of pistons 321 against the interior bores of cylinders 323, to prevent motive fluid introduced into cylinders 323 from egressing around pistons 321 (see Figs. 2 and 5). Cylinders 323 may be press-fit, welded, soldered or braised, or adhesively bonded onto complimentary bosses provided on upper cap 325 to prevent the egress of motive fluid between the cylinders 323 and the cap 325. Threaded port 325A in the face of the cap 325 allows motive fluid to be introduced into cylinders 323 between the surface of cap 325 and piston seals 322.

The opposing end of cylinders 323 may be press-fit, welded, soldered or braised, or adhesively bonded onto complimentary bosses provided on lower cap 332 to prevent the egress of motive fluid between the cylinders 323 and the cap 332. Elastomeric seals 333 are disposed within complimentary grooves in lower cap 332 to seal the periphery of the rod portion of pistons 321, to prevent motive fluid introduced into cylinders 323 from egressing between the rod portions of pistons 321 and the bores passing though lower cap 332 (see Figs. 2 and 5). Threaded port 332A in the face of cap 332 allows motive fluid to be introduced into cylinders 323, between the seals 333 within lower cap 332 and piston seals 322. Lubricant impregnated wicks 331 apply a film of lubricant to the interior walls of cylinders 323 to decrease the friction between seals 333 and cylinders 323 and increase the service life of seals 333. Magnets 330, suitably bonded or press-fit into complimentary bores in pistons 321 may be used to activate magnetically sensing sensors (not shown) to report the position of pistons 321 within cylinders 323.

A boss on the ends of the rod portion of pistons 321 passes though a complementary hole in yoke 303 and retaining rings 334, snap-fit into a complimentary groove in the boss of piston 321 to retain yoke 303 onto pistons 321. The yoke 303, retained onto pistons 321, is then pushed or pulled by the movement of pistons 321 resulting from the action of motive fluid entering ports 325A or 332A. Movement of the yoke 303 causes a corresponding movement of tendon tendon 302 through the attachment of tendon 302 to yoke 303 by the clamping action of set screw 304, as previously described. The actuator(s) is thus coupled to the yoke 303 and configured to move the yoke 303 in opposing directions in order to cause clockwise or counterclockwise pivoting of the segments 310, 320, depending on the actuation direction of the yoke 303.

It will be apparent to one skilled in the art that motive fluid, directed into port 325A will apply a force against piston 321 to move the piston downwards, in the direction of arrow 85, in turn moving yoke 303 downwards applying tension to the adducting portion 317 of tendon 302 to cause segments 310 and 320 to rotate CW about pinion pivot pins 307. Conversely, motive fluid directed into port 332A will apply a force against piston 321 to move the piston upwards, in the direction of arrow 87, in turn moving yoke 303 upwards, applying tension to the abducting portion 318 of tendon 302 to cause segments 310 and 320 to rotate CCW about pivot pins 307.

It is understood that although the present invention discloses a single contiguous cable comprising tendon 302, multiple parallel lengths of cables or a suitable strip could be substituted. It is further understood that the cable or suitable strip need not be contiguous, but could be separated into discrete adducting and abducting portions with each portion suitably attached to yoke 303 with, for example, additional set screws or by adhesive.

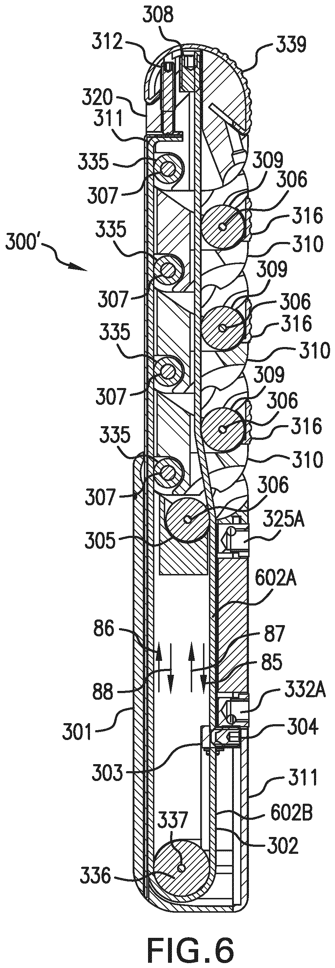

Referring now to Fig. 6, an alternative embodiment of a gripper 300' is illustrated. The gripper 300' is generally identical to the previously described gripper 300 of Figs. 1-5 but includes a first tendon 602A that is coupled to the distal segment 320 and the yoke 303 and a second tendon 602B that is coupled to the distal segment 320 and the yoke 303. The first tendon 602A couples to the distal segment 320 at a first coupling point and the second tendon 602B couples to the distal segment 320 at a second coupling point that differs from the first coupling point. The tendons 602A, 602B both attach to the yoke 303, with the tendons 602A, 602B extending from opposite sides of the yoke 303 as illustrated. The first tendon 602A acts analogously to the adducting portion 317 of the tendon 302 and the second tendon 602B acts analogously to the abducting portion 318 of the tendon 302. In all other respects, the gripper 300' may be identical to the previously described gripper 300 of Figs. 1-5, so further description is omitted.

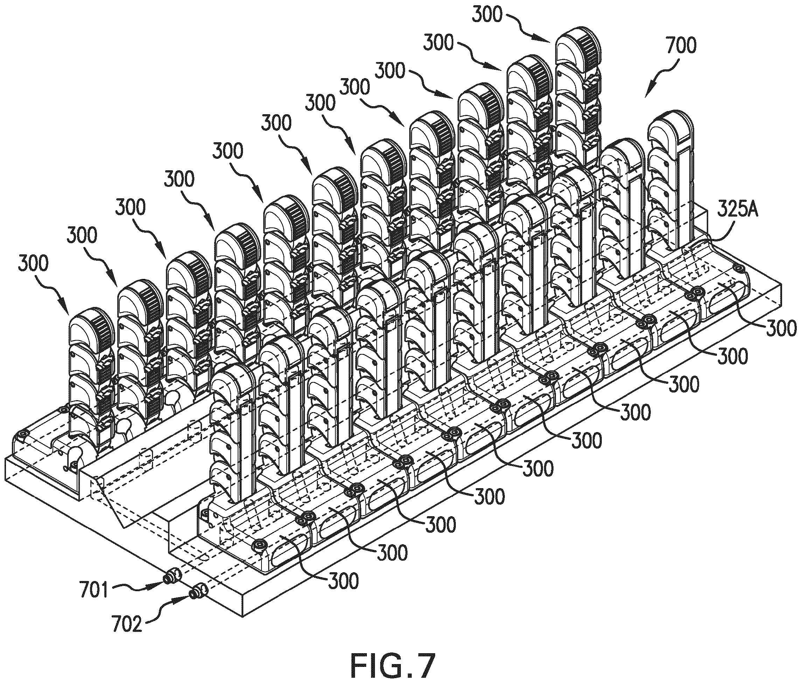

Referring now to Fig. 7, an exemplary embodiment of a gripper array 700 provided according to the present invention is illustrated. The gripper array 700 includes a plurality of juxtaposed grippers 300 that are illustrated in Figs. 1-5. It should be appreciated that the gripper array 700 may also include one or more grippers 300' illustrated in Fig. 6 as well. Each of the grippers 300 may include a fluid powered linear actuator with a first port 325A and a second port 332A to move the respective yokes 303 in the corresponding direction and pivot the segments 310, 320 clockwise or counterclockwise, as previously described. The gripper array 700 may further include a first fluid passage 701 that is fluidly coupled to the first port 325A of each gripper 300 and a second fluid passage 702 fluidly coupled to the second port 332A of each gripper 300. By providing the fluid passages 701 and 702, the grippers 300 of the gripper 700 may be selectively controlled so the respective segments 310, 320 all pivot clockwise or counterclockwise simultaneously by flowing fluid through the respective fluid passage 701, 702.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A gripper (300, 300') for gripping a workpiece, comprising:
a base (301);
at least one middle segment (310) pivotally connected to the base (301);
a distal segment (320) pivotally connected to the at least one middle segment (310);
at least one actuator;
a yoke (303) coupled to the at least one actuator and configured to be moved in opposing directions by the at least one actuator; and
at least one tendon (302) coupled to the distal segment (320) at two different coupling points and coupled to the yoke (303), wherein the at least one middle segment (310) and the distal segment (320) are configured to pivot clockwise as the at least one actuator moves the yoke (303) in a first direction and to pivot counterclockwise as the at least one actuator moves the yoke (303) in a second direction which is opposite to the first direction.

2. The gripper (300) of claim 1, wherein the at least one tendon comprises a single tendon (302) having an adducting portion (317) coupled to the distal segment (320), an abducting portion (318) coupled to the distal segment (320), and a yoke coupling point coupled to the yoke (303).

3. The gripper (300) of claim 2, wherein the yoke coupling point is part of an intermediate portion (319) that is between the adducting portion (317) and the abducting portion (318).

4. The gripper (300) of claim 2 or 3, wherein the single tendon (302) is internally disposed within the base (301), the at least one middle segment (310), and the distal segment (320).

5. The gripper (300) according to any one of claims 2 to 4, wherein the adducting portion (317) comprises a first end coupled to the distal segment (320) and the abducting portion (318) comprises a second end coupled to the distal segment (320).

6. The gripper (300) according to any one of claims 2 to 5, further comprising a plurality of pulleys (305, 309) internally disposed within the base (310) and the at least one middle segment, and each pulley (305, 309) of the plurality of pulleys (305, 309) is configured for contacting the adducting portion (317) of the single tendon (302), and/or further comprising a tendon pulley (336) disposed in the base (301), the abducting portion (318) being wrapped around the tendon pulley (336).

7. The gripper (300, 300') according to any one of claims 1 to 6, wherein the at least one actuator is configured for linearly moving the yoke (303), and/or wherein the at least one actuator is in the form of at least one fluid powered linear actuator, wherein preferably the at least one fluid powered linear actuator includes at least one cylinder (323) and at least one piston (321) slideably disposed within the at least one cylinder (323).

8. The gripper (300, 3303') according to any one of claims 1 to 7, wherein the at least one fluid powered linear actuator includes two cylinders (323) and two pistons (321) respectively disposed within the cylinders (323).

9. The gripper (300, 3303') according to any one of claims 1 to 7, wherein the at least one piston (321) comprises a rod portion coupled to the yoke (303) such that sliding of the at least one piston (321) within the at least one cylinder (323) causes a corresponding movement of the yoke (303).

10. The gripper (300, 300') according to any one of claims 1 to 7, wherein the at least one fluid powered linear actuator comprises a first port (325A) and a second port (325B), wherein fluid flow into the first port (325A) causes the at least one fluid powered linear actuator to move the yoke (303)in the first direction and fluid flow into the second port (325B) causes the at least one fluid powered linear actuator to move the yoke (303) in the second direction.

11. The gripper (300, 300') according to any one of claims 1 to 10, wherein the at least one tendon comprises a first tendon (602A) coupled to the yoke (303) and the distal segment (320) and a second tendon (602B) coupled to the yoke (303) and distal segment (320).

12. The gripper (300, 300') according to any one of claims 1 to 11, wherein the at least one actuator is internally disposed within the base (301).

13. A gripper array (700), comprising:
a plurality of juxtaposed grippers (300, 300'), wherein the gripper being a gripper provided according to any one of claims 1 to 12.

14. The gripper array of claim 13, wherein the gripper array (700) further comprises a first fluid (701) passage fluidly coupled to the first port (325A) of each fluid powered linear actuator and a second fluid passage (702) fluidly coupled to the second port (325B) of each fluid powered linear actuator.

15. The gripper array (700) of claim 14, wherein each fluid powered linear actuator respectively comprises a first port (325A) and a second port (325B), wherein fluid flow into the first port (325A) causes the fluid powered linear actuator to move the yoke (303) in the first direction and fluid flow into the second port (325B) causes the at least one fluid powered linear actuator to move the yoke (303) in the second direction
